# EUROPÄISCHE PATENTSCHRIFT

(11) **EP 1 047 482 B1**
(45) Veröffentlichungstag und Bekanntmachung des Hinweises auf die Patenterteilung: **23.02.2005**
(21) Anmeldenummer: 98947536.3
(22) Anmeldetag: 18.09.1998
(51) Int. Cl.: B01D 3/20, F25J 3/04

(54) **FLÜSSIGKEITSVERTEILER**
LIQUID DISTRIBUTOR
DISTRIBUTEUR DE LIQUIDE

(30) Priorität: 25.10.1997 DE 19747209
(43) Veröffentlichungstag der Anmeldung: 02.11.2000
(73) Patentinhaber: Messer Griesheim GmbH, 65933 Frankfurt am Main (DE)
(72) Erfinder: WALTER, Klaus-Peter, D-60388 Frankfurt (DE); HOLLING, Bernd, D-47807 Krefeld (DE)
(86) Internationale Anmeldenummer: PCT/EP1998/005962
(87) Internationale Veröffentlichungsnummer: WO 1999/021633

(56) Entgegenhaltungen:
- BE-A- 661 026
- DE-A- 3 341 992
- GB-A- 1 490 779
- US-A- 5 230 839

## Beschreibung

Die Erfindung betrifft eine Rektifiziersäule mit beabstandeten mehrflutigen Böden und einem Flüssigkeitsverteiler von Boden zu Boden.

Für das störungsfreie Arbeiten von Böden einer Rektifiziersäule ist die richtige Gestaltung der Ablaufkanäle wichtig, durch welche die Flüssigkeit zum nächst tieferen Boden geleitet wird. Damit die Flüssigkeit auch bei der größten Belastung der Rektifiziersäule noch sicher abfließen kann, muß der Querschnitt jedes Ablaufkanales reichlich groß gewählt werden. Andererseits muß vermieden werden, daß ein Teil des Dampfes den Ablaufkanal als bequemeren Weg nach oben benutzen kann. Der deshalb notwendige vollständige Abschluß der Flüssigkeit gegen den Dampf wird dadurch erreicht, daß man den Ablaufkanal genügend tief in die Flüssigkeit des nächst tieferen Bodens eintauchen läßt. Evtl. wird die Flüssigkeit auch durch ein auf dem nächst tieferen Boden angebrachtes Wehr gestaut, ehe sie auf den gelochten oder mit Glocken besetzten Teil dieses Bodens übertritt.

Damit die Flüssigkeit auf dem Boden stets hoch genug steht, muß auch dort, wo die Flüssigkeit den Boden verläßt, ein Wehr angeordnet werden.

Bei Böden großen Druchmessers von beispielsweise über 3 Meter, bereitet der Ablauf der sehr großen Flüssigkeitsmenge anfänglich erhebliche Schwierigkeiten, da man auch bei so großen Durchmessern den Bodenabstand nicht zu hoch wählt. Sie sind im wesentlichen darin begründet, daß die Flüssigkeitsmenge dem Quadrat des Säulendurchmessers, die Länge der Ablaufkante, aber nur der ersten Potenz des Säulendurchmessers proportional ist.

Die genannten Schwierigkeiten überwindet man durch den Einsatz von Rektifiziersäulen mit mehrflutigen (mindestens zweiflutigen) Böden. Zwar geht hierdurch ein Teil der für den Stoffaustausch erforderlichen Bodenfläche verloren, weshalb der Säulendurchmesser entsprechend größer gewählt werden muß, aber die für die Bewältigung der großen Flüssigkeitsmenge notwendigen Einlauf- und Auslaufkanten können dadurch wesentlich verlängert werden.

Aus der US-A-5.230.839 ist eine derartige Rektifizierkolonne mit beabstandeten zweiflutigen Böden und einem Flüssigkeitsverteiler von Boden zu Boden bekannt. Jeder Boden weist zwei Ablaufwehre auf, die mit Ablaufkanälen verbunden sind, in denen Flüssigkeit geführt wird, wobei die Ablaufkanäle mit einem Mischer verbunden sind, in denen die in den Ablaufkanälen geführte Flüssigkeit sich mischt, und wobei von dem Mischer oberhalb eines weiteren Bodens die Flüssigkeit in zwei Sektionen verteilt wird. Durch die bei dieser bekannten Rektifizierkolonne fehlende Unterteilung der Böden ist im Bereich der Böden keine gleichmäßige Flüssigkeitsverteilung gewährleistet.

Des weiteren sind in der GB-A-1.490.779 Böden mit einem kreisförmigen äußeren Ablaufwehr und Ablaufschacht von dem die Flüssigkeit über einzelne Rohre zentral in eine aus Ringen bestehende Flüssigkeitsdichtung des unteren Bodens geführt wird, beschrieben. Durch derartig ausgebildete Böden wird zwar eine zirkulierende Flüssigkeitsströmung gewährleistet, wobei aber nur ein, nach außen gerichteter Überlauf besteht.

Der Erfindung liegt die Aufgabe zugrunde, eine gattungsgleiche Rektifiziersäule mit einem Flüssigkeitsverteiler zu schaffen, mit dem eine einfache Führung und gleichmäßige Flüssigkeitsaufteilung auf einem mehrflutigen Boden erreicht wird.

Diese Aufgabe wird durch eine Rektifiziersäule, deren Boden in Rundströmrichtung mindestens zwei Ablaufwehre aufweist, die den Boden in mindestens zwei Sektionen aufteilen, wobei die Ablaufwehre mit Ablaufkanälen verbunden sind, in denen die Flüssigkeit geführt wird und die Ablaufkanäle mit einem Mischer verbunden sind, in dem die in den Ablaufkanälen geführte Flüssigkeit sich mischt und mindestens zwei von dem Mischer abzweigende Verteilerkanäle vorgesehen sind, die oberhalb eines weiteren Bodens die. Flüssigkeit auf die Sektionen verteilen, gelöst. Vorteilhafte Weiterbildungen der Erfindung sind in den Unteransprüchen angegeben.

Durch die Merkmale des Anspruchs 1 wird eine einfache Führung und gleichmäßige Flüssigkeitsaufteilung auf einem mehrflutigen Boden erreicht.

Vorteilhaft ist jeder Ablaufkanal als Rinne ausgebildet, die eine zum Mischer hin geneigte Führungsfläche aufweist, wobei über die Rinne die Flüssigkeit schaumarm in den Mischer eingeleitet wird. Aufgrund der Schräge der Ablauffläche gelangt die Flüssigkeit beruhigt in den Mischer, da die Strömungsgeschwindigkeiten im Ablaufkanal ein Entgasen der Flüssigkeit ermöglichen so daß vorteilhaft reine Flüssigkeit im Mischer an den Austrittsöffnungen des Verteilers zum darunter liegenden Boden ansteht.

Bei hohen Geschwindigkeiten der durch die mehrflutigen Böden tretenden Gase ist eine Mitreißgefahr für Flüssigkeitstropfen im Bereich von Ablaufkanal und Mischer ausgeschlossen, da die konstruktive Ausbildung des Ablaufs und Anordnung der Rinnen dies aufgrund der Geschwindigkeit von Gas und Flüssigkeit nicht zuläßt.

Hinzu kommt, daß die Ablaufrinne sich vorteilhaft zum Mischer hin verjüngt (verengt), wodurch ein Trockenlaufen der Rinne aufgrund der beschleunigten Flüssigkeitsbewegung vermieden wird.

Der Mischer weist vorteilhaft mindestens zwei von ihm abzweigende Verteilerkanäle auf, in denen Blenden angeordnet sind, die eine gleichmäßige Flüssigkeitsverteilung auf den nächsten Boden erlauben.

Über eine zusätzliche Flüssigkeitszuführung, die in den Mischer mündet, kann vorteilhaft Flüssigkeit zugeführt oder abgeführt werden, wenn die von den Böden ablaufende Flüssigkeitsmenge nicht der auf den darunterliegenden Boden zuzuführenden Flüssigkeitsmenge beim Anfahr- oder Ablauf-Normalbetrieb entspricht.
Die Verteilerkanäle sind optional mit einem rechteckigen Zulaufkanal versehen, der eine einfache Konstruktion erlaubt.

Ein Ausführungsbeispiel der Erfindung ist in der Zeichnung dargestellt und wird im folgenden näher beschrieben.

Es zeigen
- Figur 1:: eine schematische Darstellung des Flüssigkeitsverteilers
- Figur 2:: eine Draufsicht auf den als Rinne ausgebildeten Ablaufkanal

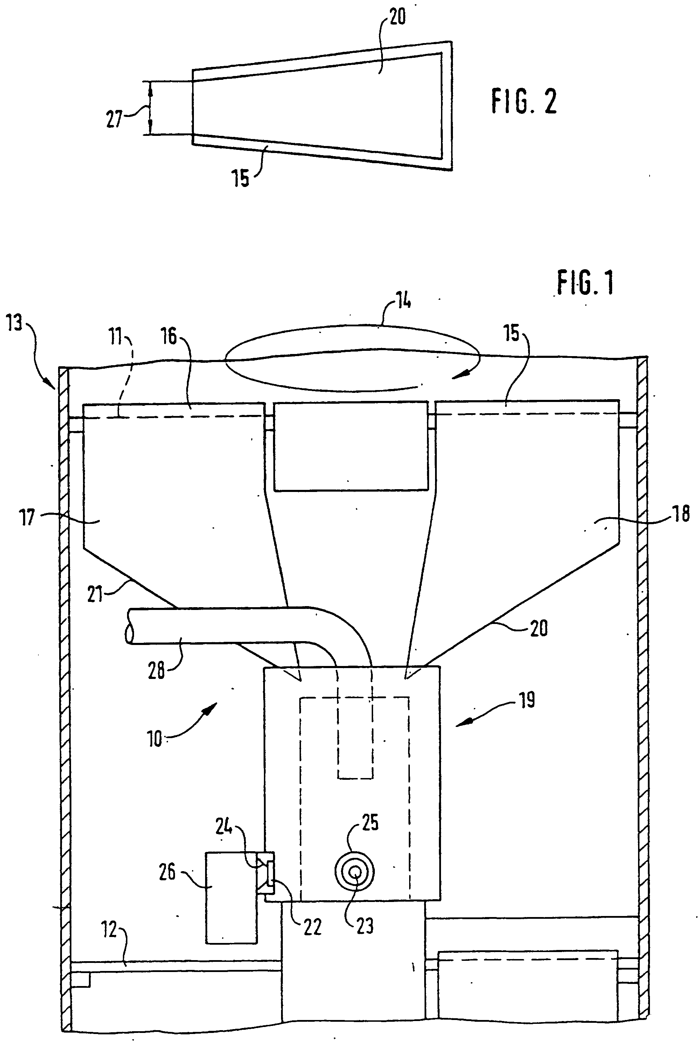

In Figur 1 ist schematisch ein Flüssigkeitsverteiler 10 für beabstandete Böden 11, 12 einer Rektifiziersäule 13 schematisch dargestellt. Die Rektifiziersäule 13 ist Bestandteil einer Anlage zur Tieftemperaturzerlegung von Luft. Die Böden 11, 12 sind als mehrflutige (mindestens 2-flutige) Rundlaufböden ausgebildet. In Rundstömrichtung 14 weist der Boden 11 bzw. 12 mindestens zwei Ablaufwehre 15, 16 auf, die jeden Boden 11, 12 in mindestens zwei Sektionen aufteilen. Die Ablaufwehre 15, 16 sind Bestandteil von rinnenförmigen Ablaufkanälen 17, 18 in denen die Flüssigkeit von einem Boden 11 zu einem Mischer 19 geführt wird. Die als Rinne ausgebildeten Ablaufkanäle 17, 18 weisen jeweils eine zum Mischer 19 hin geneigte Führungsfläche 20 bzw. 21 auf, über die die Flüssigkeit vom Boden 11 schaumarm und beruhigt in den Mischer 19 eingeleitet wird. Durch die schaumarme und beruhigte Einleitung der Flüssigkeit in den Mischer 19 über die Rinne 17 bzw. 18 wird ein nahezu konstanter Flüssigkeitsstand über den Verteileröffnungen (Blenden) des Mischers erreicht und Ungleichverteilungen über die Ablauföffnungen aufgrund schwankender Flüssigkeitshöhen vermieden.

Bei hohen Geschwindigkeiten der durch die mehrflutigen Rundlaufböden 11, 12 tretenden Gase ist eine Mitreißgefahr für Flüssigkeitstropfen im Bereich von Ablaufkanal und Mischer ausgeschlossen, da die konstruktive Ausbildung des Ablaufs und Anordnung der Rinnen dies aufgrund der Geschwindigkeiten von Gas und Flüssigkeit nicht zuläßt.

Die Ablaufrinnen 17 bzw. 18 sind zum Mischer 19 hin in ihrem Querschnitt 27 verjüngt (verengt) ausgebildet, wodurch ein Trockenlaufen der Rinnen vermieden wird.

Der zwischen zwei Böden 11, 12 im Zentrum angeordnete Mischer 19 ist als topfförmiges oder rinnenähnliches Gefäß ausgebildet, der mindestens zwei von ihm abzweigende Verteilerkanäle 22, 23 aufweist in denen vorteilhaft Mittel zum Begrenzen oder Regulieren der Flüssigkeitsströmung angeordnet sind. Bevorzugt sind die Mittel als Blenden 24, 25 ausgebildet, welche in den Verteilerkanälen 22, 23 angeordnet, eine gleichmäßige Flüssigkeitsverteilung auf den nächsten Boden 12 erlauben. Die Verteilerkanäle 22, 23 können mit einem rechteckigen Ablaufkanal 26 verbunden werden, der einerseits eine einfache Konstruktion erlaubt und andererseits eine gleichmäßige Flüssigkeitszuführung auf den nächsten Boden 12 erlaubt.

Über eine Zulaufleitung 28, die in den Mischer 19 mündet, kann zusätzliche Flüssigkeit zugeführt oder abgeführt werden, wenn die von den Böden ablaufenden Flüssigkeitsmenge nicht der auf den darunter befindlichen Boden zuzuführenden Flüssigkeitsmenge beim Anfahr- oder Normalbetrieb entspricht.

Die Rektifiziersäule ist Bestandteil einer Anlage zur Tieftemperaturzerlegung von Luft.

## Patentansprüche

1. Rektifiziersäule mit beabstandeten mehrflutigen Böden und einem Flüssigkeitsverteiler von Boden zu Boden, mit
- dem Boden (11, 12), der in Rundströmrichtung mindestens zwei Ablaufwehre (15, 16) aufweist, die den Boden (11, 12) in mindestens zwei Sektionen aufteilen,
- den Ablaufwehren (15, 16), die mit Ablaufkanälen (17, 18) verbunden sind, in denen die Flüssigkeit geführt wird,
- den Ablaufkanälen (17, 18), die mit einem Mischer (19) verbunden sind, in dem die in den Ablaufkanälen (17, 18) geführte Flüssigkeit sich mischt und mit
- mindestens zwei von dem Mischer (19) abzweigenden Verteilerkanälen (22, 23) vorgesehen sind, die oberhalb eines weiteren Bodens (12) die Flüssigkeit auf den Sektionen verteilen.

2. Rektifiziersäule nach Anspruch 1,
**dadurch gekennzeichnet,**
**daß** jeder Ablaufkanal (17, 18) als Rinne ausgebildet ist, die eine zum Mischer (19) hin geneigte Führungsfläche (20) aufweist, und in der Rinne die Flüssigkeit schaumarm in den Mischer (19) strömt.

3. Rektifiziersäule nach Anspruch 1 oder 2,
**dadurch gekennzeichnet,**
**daß** sich die Ablaufrinne (17, 18) zum Mischer (19) hin in ihren Querschnitt (27) verengt.

4. Rektifiziersäule nach einem der Ansprüche 1 bis 3,
**dadurch gekennzeichnet,**
**daß** in den Verteilerkanälen (22, 23) Blenden (24, 25) angeordnet oder die Verteilerkanäle als Blenden ausgebildet sind.

5. Rektifiziersäule nach einem der Ansprüche 1 bis 4,
**dadurch gekennzeichnet,**
**daß** die Verteilerkanäle (22, 23) mit einer Ablaufkanal (26) verbunden sind.

6. Rektifiziersäule nach einem der Ansprüche 1 bis 5,
**dadurch gekennzeichnet,**
**daß** dem Mischer eine Zulaufleitung (28) zugeordnet ist, die mit einer Flüssigkeitsquelle verbunden ist, der zur Flüssigkeitsentnahme dient.

7. Rektifiziersäule nach einem der Ansprüche 1 bis 6,
**gekennzeichnet durch** die Ausbildung des Bodens als mehrflutiger Rundlaufbogen.

8. Anlage zur Tieftemperaturzerlegung von Luft, die eine Rektifiziersaüle nach einem der Ansprüche 1 bis 7 aufweist.

## Claims

1. Rectification column with multi-flow plates and a liquid distributor from plate to plate, having
- the plate (11, 12), which in the flow-round direction has at least two run-off weirs (15, 16) which divide the plate (11, 12) into at least two sections,
- the run-off weirs (15, 16), which are connected to run-off passages (17, 18) in which the liquid is guided,
- the run-off passages (17, 18), which are connected to a mixer (19) in which the liquid guided in the run-off passages (17, 18) is mixed, and having
- at least two distributor passages (22, 23) which branch off from the mixer (19) are provided, these passages distributing the liquid to the sections above a further plate (12).

2. Rectification column according to Claim 1, **characterized in that** each run-off passage (17, 18) is formed as a channel which has a guide surface (20) inclined towards the mixer (19), and in the channel the liquid flows into the mixer (19) with little foaming.

3. Rectification column according to Claim 1 or 2, **characterized in that** the cross section (27) of the run-off channel (17, 18) narrows towards the mixer (19).

4. Rectification column according to any of Claims 1 to 3, **characterized in that** diaphragms (24, 25) are arranged in the distributor passages (22, 23) or the distributor passages are formed as diaphragms.

5. Rectification column according to any of Claims 1 to 4, **characterized in that** the distributor passages (22, 23) are connected to a run-off passage (26).

6. Rectification column according to any of Claims 1 to 5, **characterized in that** the mixer is assigned a feed line (28) which is connected to a liquid source that is used for removal of liquid.

7. Rectification column according to any of Claims 1 to 6, **characterized by** the plate being formed as a multi-flow rotary bend.

8. Installation for the low-temperature separation of air which includes a rectification column according to any of Claims 1 to 7.

## Revendications

1. Colonne de rectification comprenant des étages espacés à plusieurs flux et un répartiteur de liquide d'un étage à l'autre, avec
- l'étage (11, 12), qui présente dans la direction de l'écoulement circulaire au moins deux déversoirs de sortie (15, 16), qui divisent l'étage (11, 12) en au moins deux sections,
- les déversoirs de sortie (15, 16), qui sont reliés à des conduits de sortie (17, 18), dans lesquels est guidé le liquide,
- les conduits de sortie (17, 18), qui sont reliés à un mélangeur (19), dans lequel le liquide guidé dans les conduits de sortie (17, 18) se mélange et où
- au moins deux conduits de répartition (22, 23) partant du mélangeur (19) sont prévus, lesquels répartissent le liquide dans les sections au-dessus d'un autre étage (12).

2. Colonne de rectification selon la revendication 1,
**caractérisée en ce que**
chaque conduit de sortie (17, 18) est réalisé sous la forme d'une goulotte qui présente une surface de guidage (20) inclinée en direction du mélangeur (19), et le liquide dans la goulotte s'écoule avec une faible formation de mousse dans le mélangeur (19).

3. Colonne de rectification selon la revendication 1 ou 2,
**caractérisée en ce que**
la section transversale (27) de la goulotte de sortie (17, 18) se rétrécit en direction du mélangeur (19).

4. Colonne de rectification selon l'une quelconque des revendications 1 à 3,
**caractérisée en ce que**
des diaphragmes (24, 25) sont disposés dans les conduits de répartition (22, 23), ou bien les conduits de répartition sont réalisés sous forme de diaphragmes.

5. Colonne de rectification selon l'une quelconque des revendications 1 à 4,
**caractérisée en ce que**
les conduits de répartition (22, 23) sont reliés à un conduit de sortie (26).

6. Colonne de rectification selon l'une quelconque des revendications 1 à 5,
**caractérisée en ce que**
l'on associe au mélangeur une conduite d'amenée (28) qui est reliée à une source de liquide qui sert à prélever le liquide.

7. Colonne de rectification selon l'une quelconque des revendications 1 à 6,
**caractérisée par** la conception de l'étage sous forme d'étage circulaire à plusieurs flux.

8. Installation de séparation de l'air à basse température, qui présente une colonne de rectification selon l'une quelconque des revendications 1 à 7.
